# EUROPÄISCHE PATENTSCHRIFT

(11) **EP 4 489 981 B1**
(45) Veröffentlichungstag und Bekanntmachung des Hinweises auf die Patenterteilung: **21.10.2026**
(21) Anmeldenummer: 23709385.1
(22) Anmeldetag: 03.03.2023
(51) Int. Cl.: B60J 1/17, E05F 11/38

(54) **FAHRZEUG MIT EINER RAHMENLOSEN FAHRZEUGTÜR**
VEHICLE WITH A FRAMELESS VEHICLE DOOR
VÉHICULE COMPRENANT UNE PORTE DE VÉHICULE SANS CADRE

(30) Priorität: 08.03.2022 DE 102022105398
(43) Veröffentlichungstag der Anmeldung: 15.01.2025
(73) Patentinhaber: Bayerische Motoren Werke Aktiengesellschaft, 80809 München (DE)
(72) Erfinder: LOCHBRUNNER, Peter, 81547 Muenchen (DE); FRENER, Gernot, 81369 München (DE)
(86) Internationale Anmeldenummer: PCT/EP2023/055400
(87) Internationale Veröffentlichungsnummer: WO 2023/169942

(56) Entgegenhaltungen:
- EP-A1- 0 704 595
- DE-A1- 2 205 147

## Beschreibung

Die Erfindung betrifft ein Fahrzeug, insbesondere ein Kraftfahrzeug, nach dem Oberbegriff des Patentanspruchs 1 mit einer rahmenlosen Fahrzeugtür. Dabei betrifft die Erfindung speziell ein verbessertes Türfenster in einer rahmenlosen Fahrzeugtür, das in die Fahrzeugtür hinein und aus dieser heraus verfahrbar ist. Weiterhin betrifft die Erfindung ein Verfahren zum aerodynamisch optimierten dichten, insbesondere wasserdichten, Verschließen einer Türfensteröffnung in einem Fahrzeug.

Die Fensterheberkinematik von rahmenlosen Fahrzeugtüren ist äußerst komplex, sodass hier häufiger Probleme mit Wasserdichtheit und Aeroakustik auftreten als bei Fahrzeugtüren mit Rahmen. Der Grund für die hohe Komplexität ist der fehlende Fensterrahmen, sodass die Türfensterscheibe, die im ausgefahrenen Zustand nach oben frei aus dem Türkörper heraussteht, in sämtlichen Toleranzsituationen perfekt zum Türdichtsystem passen muss, um sowohl die Dichtheitsanforderungen als auch die Dauerlaufanforderungen aller Komponenten zu erfüllen.

Das Türdichtsystem des Fahrzeuges übt im geschlossenen Zustand der Fahrzeugtür eine auf die Fahrzeugtür und die Türfensterscheibe gerichtete Kraft aus, um die Fahrzeugtür einschließlich der Türfensterscheibe im geschlossenen Zustand abzudichten. Diese Dichtkraft führt speziell im Bereich der Türfensterscheibe oberhalb der Brüstung des Türkörpers dazu, dass die Türfensterscheibe nach außen gedrückt wird und sich nicht mehr in der ursprünglich konstruierten Lage befindet.

Dies führt bei herkömmlichen Konstruktionen zu mehreren Problemen. Einerseits weicht die Scheibe optisch von der konstruierten Lage ab, sodass man am Fahrzeug bei geschlossener Tür sehen kann, dass die Türfensterscheibe der Tür nicht ordentlich mit den anderen Bauteilen an der Fahrzeugseite fluchtet, zum Beispiel mit einer karosseriefesten Seitenscheibe oder einer Blende an der B-Säule. Andererseits führt diese Abweichung auch dazu, dass die Türfensterscheibe, wenn sie nach oben fährt, nicht passgenau in das Dichtsystem im Dachrahmenbereich einfahren kann. Daraus resultieren Dichtheitsprobleme hinsichtlich der Aeroakustik und hinsichtlich der Wasserdichtheit. Daher muss die Kinematik des Fensterhebers so ausgelegt sein, dass die Türfensterscheibe sämtliche Kräfte des Dichtsystems kompensiert. Das Ziel ist es, dass die Türfensterscheibe bei geschlossener Tür den ursprünglichen Strakflächen des Fahrzeuges entspricht.

Unter einer Strakfläche ist eine sichtbare Fläche eines Fahrzeugs in ihrer durch die Konstruktion theoretisch vorgegebene Raumform und räumlichen Position ("Raumlage") zu verstehen. Sowohl die Raumform als auch die räumliche Position dieser Fläche können jedoch in der praktischen Realisierung eines Bauteils, beispielsweise durch an der Bauteilfläche angreifende Kräfte, von der idealen Strak-Raumform abweichen.

Die Kinematik eines Fensterhebers von rahmenlosen Fahrzeugtüren wird herkömmlicherweise mit zwei Führungsschienen ausgeführt. Die Konstruktion der Schiene erfolgt auf Basis der Krümmung der Scheiben-Strakfläche. Im Normalfall geschieht dies dadurch, dass die Krümmungsachse für die Führungsschiene der Krümmungsachse der Strak-Scheibenfläche entspricht. Folglich bewegt sich die Türfensterscheibe während des Verfahrens immer auf derselben verlängerten gekrümmten Bahn oder Fläche, der so genannten "Scheibentonne". Im geschlossenen Zustand der Türfensterscheibe wird diese jedoch von den auf sie einwirkenden Dichtungskräften nach außen gedrückt.

Um eine Kompensation dieser Dichtungsgegenkräfte zu erreichen, wird herkömmlicherweise häufig an einer Führungsschiene, bei vorderen seitlichen Fahrzeugtüren ist es üblicherweise die hintere Führungsschiene, im oberen Bereich der Führungsschiene ein Knick nach innen zur vertikalen Fahrzeuglängsmittelebene vorgesehen, durch den die Türfensterscheibe während des Hochfahrens im hinteren Bereich gezwungen wird, nach innen zu kippen. Dadurch entsteht an der jeweiligen Dichtung eine Vorspannung, die die Dichtungsgegenkräfte kompensieren soll. Dadurch, dass dieser Knick jedoch nur an der hinteren Führungsschiene vorgesehen ist, die vordere Führungsschiene jedoch exakt der Scheibenkrümmung entspricht, ist die Kinematik des Fensterhebers überbestimmt. Die Türfensterscheibe wird verdrillt und es kommt zu einer Verspannung des gesamten Systems. Die Folge ist eine undefinierte Lage der Türfensterscheibe. Das Verformungsbild ist dabei abhängig vom Kräftegleichgewicht und somit von der Steifigkeit aller beteiligten Komponenten (Türfensterscheibe, Fensterheber, Türblech, Dichtungen). Dies macht es außerordentlich schwierig, die Lage der Seitenscheibe gezielt zu beeinflussen, um beispielsweise auftretende Toleranzen zu kompensieren.

Die EP 0 201 343 A2 zeigt und beschreibt eine Fahrzeugtür mit einer Fensterheberkinematik, bei der die Türfensterscheibe oben und unten mit Gleithalterungen versehen ist, die mit jeweils einer Führungsnase versehen sind, welche in die gleichmäßig gekrümmten Führungsschienen eingreifen und darin geführt werden. Die oberen und die unteren Gleithalterungen sind unterschiedlich groß, so dass die Türfensterscheibe in ihrem unteren Bereich weiter außen geführt wird als in ihrem oberen Bereich; die Türfensterscheibe ist also keilförmig gestellt, sodass sich die Krümmungsebene der Türfensterscheibe von der Krümmungsebene der Führungsschienen unterscheidet.

Die DE 10 2019 215 093 B2 zeigt und beschreibt einen Fensterheber in einer Fahrzeugtür, bei dem zumindest eine der Führungsschienen in ihrem oberen Bereich mit einer schwenkbeweglichen Befestigungsvorrichtung an der Türstruktur gelagert ist.

Die DE 10 2018 000 868 A1 zeigt und beschreibt eine Fahrzeugtür mit einer höhenverstellbaren Fensterscheibe, die oberhalb der Türbrüstung in einem Türfensterrahmen derart geführt ist, dass die äußere Oberfläche der Fensterscheibe bündig mit der Karosserieoberfläche verläuft (Flushglazing).

Die DE 28 43 004 A1 betrifft eine Fahrzeugtür mit einer Fensterheberkinematik, bei der die Türfensterscheibe, die oberhalb der Türbrüstung in einem Türfensterrahmen so geführt ist, dass auch hier ein Flushglazing-Effekt erzielt wird. Die Führung der Türfensterscheibe erfolgt dabei derart, dass deren oberer Rand eine S-förmige Bewegung nach außen vollführt, bevor er in die dachseitige Dichtung eintritt.

Die DE 22 05 147 A1 und auch die EP 0 704 595 A1 zeigen jeweils eine herkömmliche Türfensterscheibenanordnung eines Kraftfahrzeugs mit einem Fensterhebermechanismus zur Aufwärts- und Abwärts-Bewegung einer Türfensterscheibe. Der jeweilige Mechanismus weist Führungsschienen für die Türfensterscheibe auf und ist in seinem unteren Bereich in Fahrzeugquerrichtung verlagerbar. Dadurch wird der gesamte Fensterhebermechanismus um eine in Fahrzeuglängsrichtung verlaufende Achse verschwenkt.

Aufgabe der vorliegenden Erfindung ist es, ein gattungsgemäßes Fahrzeug, insbesondere eine dementsprechende rahmenlose Fahrzeugtür, so zu verbessern, dass die Türfensterscheibe im geschlossenen Zustand der Fahrzeugtür sowohl wirksam abgedichtet ist, als auch die Abweichungen der Raumform und der Raumlage der Türfensterscheibe relativ zum Türkörper von der Raumform und der Raumlage der zugeordneten Strakfläche relativ zum Türkörper minimiert sind. Schließlich soll durch die Erfindung auch ein entsprechendes Verfahren zum aerodynamisch optimierten dichten und insbesondere wasserdichten Verschließen einer Türfensteröffnung eines Fahrzeugs angegeben werden.

Der auf das Fahrzeug und insbesondere auf die Fahrzeugtür gerichtete Teil der Aufgabe wird gelöst mit den Merkmalen des Patentanspruchs 1.

Ein Fahrzeug, insbesondere ein Kraftfahrzeug, ist ausgestattet mit einer Fahrzeugkarosserie, die zumindest eine rahmenlose Fahrzeugtür aufweist, die einen unteren Türkörper und eine mittels einer Fensterhebereinheit nach oben aus dem Türkörper heraus und in diesen wieder hinein verfahrbare Türfensterscheibe aufweist, wobei der Türkörper oberhalb einer den Türkörper nach oben begrenzenden Türbrüstung rahmenlos ausgestaltet ist, wobei die Türbrüstung einen, vorzugsweise an seinen Längsrändern mit Dichtungen versehenen, Durchtrittsschlitz für die Türfensterscheibe aufweist, wobei die Türfensterscheibe im vollständig aus dem Türkörper ausgefahrenen Zustand und bei geschlossener Fahrzeugtür zumindest mit ihrem ersten seitlichen Scheibenrand an einer ersten karosserieseitigen Dichtung und mit ihrem zweiten seitlichen Scheibenrand an einer zweiten karosserieseitigen Dichtung anliegt und wobei die Türfensterscheibe zur vertikalen Fahrzeuglängsmittelebene hin gekrümmt ist und wobei die jeweilige Führungsschiene parallel zur unbelasteten Türfensterscheibe in deren von der Führungsschiene geführtem Bereich verläuft und um dieselbe Krümmungsachse wie die Türfensterscheibe gekrümmt ist. Bei diesem Fahrzeug ist erfindungsgemäß vorgesehen, dass die Krümmung und/oder die Lage der Führungsschienen relativ zum Türkörper von einer konstruktiv festgelegten Strak-Krümmung und/oder Strak-Raumlage der Führungsschienen relativ zum Türkörper abweicht und dergestalt ausgebildet beziehungsweise angeordnet ist, dass die Türfensterscheibe in einem aus dem Türkörper ausgefahrenen unbelasteten Zustand eine erste Raumform ausbildet und/oder eine erste Raumlage relativ zum Türkörper einnimmt, die von einer konstruktiv festgelegten Türfensterscheiben-Strak-Raumform und/oder Türfensterscheiben-Strak-Raum lage relativ zum Türkörper abweicht, und dass die Türfensterscheibe in einem belasteten Zustand, in dem die Scheibenränder an der jeweils zugeordneten Dichtung anliegen, eine zweite Raumform ausbildet und/oder eine zweite Raumlage relativ zum Türkörper einnimmt, die im Wesentlichen der Türfensterscheiben-Strak-Raumform und/oder Türfensterscheiben-Strak-Raumlage relativ zum Türkörper entspricht; sowie dass die Türfensterscheibe im unbelasteten Zustand im Wesentlichen lokal die gleiche Krümmung wie die Strak-Raumform aufweist, jedoch in ihrer Raumlage von der Strak-Raumlage abweicht und/oder dass der Krümmungsradius der Türfensterscheibe um die in der Seitenansicht zum Durchtrittsschlitz im Wesentlichen parallel verlaufende Krümmungsachse im unbelasteten Zustand der Türfensterscheibe kleiner ist als deren Krümmungsradius im belasteten Zustand. Der Begriff "im Wesentlichen" bedeutet hier, dass unwesentliche und mit dem bloßen Auge nicht sichtbare Abweichungen von der Strak-Raumform zulässig sind, beispielsweise dass die Krümmung der Türfensterscheibe nur unwesentlich von der Strak-Krümmung abweicht, ohne dass dabei die Dichtwirkung aufgehoben oder wirksam reduziert ist. Das alternativ oder kumulativ vorgesehene Merkmal, dass der Krümmungsradius der Türfensterscheibe um die in der Seitenansicht (auf die vertikale Fahrzeuglängsmittelebene) zum Durchtrittsschlitz im Wesentlichen parallel verlaufende Krümmungsachse im unbelasteten Zustand der Türfensterscheibe kleiner als deren Krümmungsradius im belasteten Zustand, ermöglicht es, dass die von der jeweiligen Dichtung, insbesondere von der dachseitigen Dichtung, auf die Türfensterscheibe einwirkenden Druckkräfte die Krümmung oder Wölbung der Türfensterscheibe verringern und so deren Raumform der Raumform der zugeordneten Strakfläche annähern. Im belasteten Zustand nimmt die Türfensterscheibe daher die Strak-Raumform ein. Der Begriff "im Wesentlichen" bedeutet in diesem Zusammenhang, dass die Krümmungsachse nicht exakt parallel verlaufen muss, sondern um einige Winkelgrade, beispielsweise um bis zu +/- 20° oder vorzugsweise um bis zu +/- 10° oder weitervorzugsweise um bis +/- 5° von der Parallelen abweichen kann.

Als "Krümmungsachse" der Türfensterscheibe wird hier eine Achse mit einer in Fahrzeuglängsrichtung verlaufenden wesentlichen Richtungskomponente verstanden, auf der alle Mittelpunkte der Krümmungsradien der Türfensterscheibe entlang deren Erstreckung in Fahrzeuglängsrichtung liegen. Bei einer Bewegung der Türfensterscheibe zwischen ihrer im Türkörper versenkten Position und der aus dem Türkörper ausgefahrenen Position rotiert die Türfensterscheibe um diese Krümmungsachse und bewegt sich zugleich entlang dieser Krümmungsachse. Sie beschreibt dabei eine schraubenartige Fläche, die vereinfacht als "Scheibentonne" bezeichnet wird. Die Fläche der Türfensterscheibe ist vorzugsweise über deren Längserstreckung mit unterschiedlichen Krümmungsradien gekrümmt, wobei der Mittelpunkt des jeweiligen Krümmungsradius' auf der Krümmungsachse liegt und sich dieser Krümmungsradius orthogonal zur Krümmungsachse erstreckt. Wenn hier von "einem Krümmungsradius" gesprochen wird, so betrifft diese Wortwahl stets einen lokalen Krümmungsradius und die entsprechenden Ausführungen treffen auf alle Krümmungsradien zu.

Der Krümmungsradius der Schiene ergibt sich aus dem Krümmungsradius der Scheibe am Ort der Schienenführung weil beide gekrümmten Geometrien die gleiche Krümmungsachse besitzen (Schraubachse). Da die Schienen meist jedoch weiter fahrzeuginnen liegen also ein gewisses Offset zur Scheibe haben, ist der Krümmungsradius der Schiene um dieses Offset geringer als der Krümmungsradius der Scheibe. Der Krümmungsradius der Türfensterscheibe ist in Fahrzeuglängsrichtung nicht notwendigerweise konstant und kann von vorne nach hinten variieren.

Für den Fall, dass das Fahrzeug ein Dach oder einen die Türfensteröffnung begrenzenden Dachholm aufweist oder dass bei einem Cabriolet das Dach geschlossen ist, liegt die Türfensterscheibe im aus dem Türkörper vollständig ausgefahrenen Zustand und bei geschlossener Fahrzeugtür mit ihrem oberen Scheibenrand zusätzlich an einer dachseitigen Dichtung an, die ebenfalls eine nach außen gerichtete Dichtungskraft auf die Türfensterscheibe ausübt. Auch diese Dichtungskraft ist bei der Auslegung des erfindungsgemäßen Fahrzeugs zu berücksichtigen.

Als "unbelastete Türfensterscheibe" wird hier eine Türfensterscheibe einer rahmenlosen Fahrzeugtür betrachtet die - vorzugsweise bis zum Anschlag - aus dem Türkörper ausgefahren ist und dennoch nicht an den karosserieseitigen Dichtungen, wie beispielsweise an der B-Säule oder im Dachrahmen, anliegt. Dies ist der Fall, wenn keine Türfensterdichtungen (karosserieseitig und türseitig) eingebaut sind. Dieser Zustand wird auch als "unbelasteter Zustand" bezeichnet.

Als "belastete Türfensterscheibe" wird hier eine Türfensterscheibe einer rahmenlosen Fahrzeugtür betrachtet die - vorzugsweise bis zum oberen Anschlag - aus dem Türkörper ausgefahren ist und an den karosserieseitigen Dichtungen anliegt. Dieser Zustand wird auch als "belasteter Zustand" bezeichnet.

Durch die beschriebene Konstruktion wird eine Raumform und/oder Raumlage der Türfensterscheibe erzeugt, die im geschlossenen Zustand an unterschiedlichen Stellen der Türfensterscheibe unterschiedliche Vorspannungen ausbildet, beispielsweise unterschiedliche Vorspannungen an der A-Säule oben und an der B-Säule oben.

Bei einer erfindungsgemäß zur Strak-Raumform unterschiedlichen Raumform der Türfensterscheibe kann die Lage der Krümmungsachse der Türfensterscheibe im unbelasteten Zustand von der Lage der Krümmungsachse der Strak-Raumform abweichen, welcher sich die Türfensterscheibe im belasteten Zustand annähert.

Beim Schließen der Tür wird die an den Dichtungen anliegende Türfensterscheibe (und mit ihr auch die Fensterhebereinheit mit den Führungsschienen) durch die Gegenkräfte des Dichtsystems belastet. Dadurch wird die zuvor vorgespannte Scheibe auf die gewünschte Strak-Raumform und/oder Türfensterscheiben-Strak-Raumlage gebracht. Wird die Türfensterscheibe bei geschlossener Tür aus dem Türkörper nach oben gefahren, wird die Scheibe bereits von Beginn an aufgrund der Dichtungen entlang der B-Säule leicht nach außen gedrückt, sodass bei geschlossener Tür die Türfensterscheibe und mit ihr das gesamte Fensterhebersystem, das die Fensterhebereinheit mit den Führungsschienen und die darin geführte Türfensterscheibe aufweist, nur im komplett abgesenkten Zustand der Türfensterscheibe im Wesentlichen unbelastet ist.

Erfindungsgemäß wird eine Vorspannung der Türfensterscheibe gegenüber dem Türdichtsystem erst beim Anliegen der Türfensterscheibe an den Dichtungen, insbesondere am oberen Bereich der seitlichen Dichtungen und gegebenenfalls an der dachseitigen Dichtung, erzeugt, ohne dass das gesamte Fensterhebersystem in sich bereits verspannt ist. Erreicht wird dies dadurch, dass die Raumform und/oder die Raumlage der Türfensterscheibe im unbelasteten Zustand von der Raumform und/oder der Raumlage der zugeordneten Strakfläche abweicht und die Türfensterscheibe die Raumform und/oder die Raumlage der Strakfläche erst mit der Gegenkraft des Dichtsystems einnimmt. Das Grundprinzip der Erfindung ist somit die Vermeidung einer Überbestimmung und einer daraus resultierenden Zwangslage des Fensterhebersystems.

Ein wesentlicher Vorteil der Erfindung besteht darin, dass eine vorgespannte Türfensterscheibenfläche erzeugt wird, die im unbelasteten Zustand während des Verfahrens in ihrer eigenen gekrümmten Fläche (Scheibentonne) bleibt. Diese vorgespannte Türfensterscheibenfläche berücksichtigt vorzugsweise unterschiedliche Vorspannwerte an unterschiedlichen Orten des Randes der Türfensterscheibe im Bereich der A-Säule und im Bereich der B-Säule gegenüber der konstruktiven Strakfläche der Türfensterscheibe.

Bei herkömmlichen Fensterhebersystemen für rahmenlose Fahrzeugtüren war es bislang üblich, bei der Konstruktion der Fensterheberkinematik die konstruktive, gekrümmte Strakfläche (Strakscheibentonne) als Bewegungsfläche der Türfensterscheibe der Auslegung der Kinematik zugrunde zu legen. Bei derartigen bisherigen Systemen wird die Kinematik nicht auf Basis einer vorgespannten Fläche konstruiert, sondern auf Basis der originalen Strakfläche. Somit muss danach eine Vorspannung aufgebracht werden um die auftretenden Dichtungskräfte zu kompensieren und einigermaßen die gewünschte Straklage der Türfensterscheibe im geschlossenen Zustand zu erhalten. Diese Vorspannung wird bei bisherigen Systemen entweder mit keilförmigen Gleitern oder durch eine Verstellung der Führungsschienen oder eine geometrische Modifikation der Schienen, wie beispielsweise ein Knick im oberen Bereich der jeweiligen Führungsschiene, ausgeführt. Dadurch ist die Kinematik der Türfensterscheibe nicht mehr stetig und somit nicht exakt. Eine derartige herkömmliche Türfensterscheibe fährt beim Verfahren nicht immer auf ihrer eigenen Fläche (Scheibentonne). Es kommt zu Verspannungen im System und zu ungewollten Abweichungen der Scheibenlage auf Höhe der Brüstung und in anderen Bereichen. Das Ergebnis können Undichtigkeiten und Abweichungen zur originalen Strakfläche sein.

Diese Nachteile des Standes der Technik werden durch die Erfindung überwunden. Gemäß der vorliegenden Erfindung hingegen wird eine neue Kinematik-Scheibentonne erstellt die in ihrer Geometrie (Raumform und Raumlage) von der konstruktiven Strakscheibentonne abweicht. Diese neue Kinematik-Scheibentonne wird nun für die Konstruktion der Fensterheberkinematik herangezogen, wodurch die gewünschten geometrischen Vorspannwerte des Fensterhebersystems und insbesondere der Türfensterscheibe erreicht werden.

Auch die Fensterheberschienen sind auf Basis dieser vorgespannten Türfensterscheibenfläche konstruiert, sodass die Türfensterscheibe in der Türbrüstung immer exakt durch dieselbe Linie des Austrittschlitzes fährt. Daraus ergibt sich, dass die gefertigten Bauteile (Fensterheberschienen und Türfensterscheibe) und ihre Kinematik in ihrer Raumform von der originalen Strakfläche (Strakscheibentonne) und der dazu passenden Kinematik abweichen.

Weitere bevorzugte und vorteilhafte Ausgestaltungsmerkmale des erfindungsgemäßen Fahrzeugs sind Gegenstand der Unteransprüche 2 bis 4.

Vorzugsweise ist die Krümmung des von der jeweiligen Führungsschiene geführten Bereichs der Türfensterscheibe in deren unbelastetem Zustand jeweils um eine Krümmungsachse gekrümmt, die zumindest eine zum Durchtrittsschlitz im Wesentlichen parallel verlaufende Richtungskomponente aufweist. Derart gekrümmte Türfensterscheiben sind heute bei vielen Fahrzeugen zumindest in Seitentüren statt einfacher ebener Türfensterscheiben vorgesehen. Beispielsweise kann die Türfensterscheibe zumindest um eine in der Seitenansicht (auf die vertikale Fahrzeuglängsmittelebene E_{ZX}) zum Durchtrittsschlitz im Wesentlichen parallel verlaufende Krümmungsachse zur vertikalen Fahrzeuglängsmittelebene hin gekrümmt sein.

Von Vorteil ist es auch, wenn die karosserieseitigen Dichtungen jeweils einen gekrümmten Verlauf aufweisen, der der Krümmung des zugeordneten Scheibenrandes der Türfensterscheiben-Strak-Raumform entspricht. Dadurch baut sich eine ideale Vorspannung der Dichtungen gegenüber der Türfensterscheibe auf.

Bei einer bevorzugten Weiterbildung der Erfindung ist vorgesehen, dass die Türfensterscheibe zusätzlich zu der Krümmung um die Krümmungsachse mit der zum Durchtrittsschlitz im Wesentlichen parallel verlaufenden Richtungskomponente zumindest bereichsweise auch um eine im Wesentlichen vertikale Krümmungsachse zur Fahrzeuglängsmittelebene hin gekrümmt ist, wobei der Krümmungsradius der Türfensterscheibe um die im Wesentlichen vertikale Krümmungsachse im unbelasteten Zustand der Türfensterscheibe kleiner ist als im belasteten Zustand. Die so räumlich gewölbte Türfensterscheibe kann um die zweite, im Wesentlichen vertikale Krümmungsachse ebenso vorgespannt sein wie dies vorstehend in Bezug auf die erste, im Wesentlichen horizontal verlaufende Krümmungsachse beschrieben wurde.

Insbesondere von Vorteil ist dabei, wenn der Verlauf der Krümmung der jeweiligen Führungsschiene stetig ist.

Bei diesem erfindungsgemäß vorgesehenen Fensterhebersystem fährt die Türfensterscheibe unverspannt auf einer durch die - vorzugsweise stetige - Krümmung der Führungsschienen, die der lokalen Krümmung der Türfensterscheibe im Bereich von deren jeweiliger Führung entspricht, definierten Bewegungsbahn. Die daraus resultierende flächige Bewegungsbahn-Hülle der Türfensterscheibe ist nicht identisch mit der konstruktiv vorgesehenen Scheibentonne der Strak-Raumform, sondern stärker einwärtsgerichtet oder gekrümmt als diese. Die Türfensterscheibe wird somit entlang der Bewegungsbahn, ohne verdrillt oder anderweitig verformt zu werden, in jeweilige Positionen gebracht, die jeweils von der konstruktiv vorgegebenen Strak-Raumform abweichen, so dass die Türfensterscheibe eine bestimmte Vorspannung gegenüber dem Dichtsystem ausbildet.

Dabei sollte die Türfensterscheibe im Bereich ihres Durchtritts durch die Türbrüstung, also im Durchtrittsschlitz, während des Verfahrens der Türfensterscheibe einen konstant bleibenden seitlichen Abstand zum jeweiligen Rand des Durchtrittsschlitzes einhalten, der auch dem jeweiligen Abstand der Strak-Raumform der Türfensterscheibe zum zugeordneten Rand des Durchtrittsschlitzes entspricht.

Die mit dieser erfindungsgemäßen Ausgestaltung erzielte Vorspannung der Türfensterscheibe ist dadurch nicht an allen Punkten entlang der Bewegungsbahn identisch. So wird durch die vorgegebene Krümmung der Türfensterscheibe und der Führungsschienen sowie durch die räumliche Positionierung des Fensterhebersystems auf Höhe der Türbrüstung weniger Vorspannung erzielt als im Bereich der dachseitigen Dichtung. Auch im Bereich der seitlichen karosserieseitigen Dichtungen, insbesondere im Bereich der A-Säule und der B-Säule im Fall einer Seitentür, werden unterschiedliche Vorspannungswerte entlang des vertikalen Verlaufs der Dichtung realisiert. Die dadurch an unterschiedlichen Orten der Türfensterscheibe bewirkten unterschiedlichen Druckkräfte der jeweiligen Dichtungen führen zu einer kontrolliert bestimmbaren Verformung der Türfensterscheibe in deren geschlossenem Zustand, so dass sich die Raumform der Türfensterscheibe in diesem Zustand der Raumform der zugeordneten Strak-Raumform, idealerweise bis zur Identität, annähert.

Die vorliegende Erfindung kann bei sämtlichen rahmenlosen Fahrzeugtüren eingesetzt werden. Klassische Anwendungsfälle sind zum Beispiel Coupés, Cabrios, Gran Coupés oder andere Fahrzeuge mit rahmenlosen seitlichen oder hinteren Türen. Der Einsatz dieser Erfindung leistet einen wesentlichen Beitrag zur Qualitätssteigerung. Dadurch können Nacharbeitsaufwendungen, Änderungskosten von Serienwerkzeugen sowie Gewährleistungskosten vermieden werden.

Der auf das Verfahren gerichtete Teil der Aufgabe wird gelöst mit einem Verfahren gemäß Patentanspruch 5 oder alternativ gemäß Patentanspruch 6.

Ein erstes Verfahren zum aerodynamisch optimierten dichten und insbesondere wasserdichten Verschließen einer Türfensteröffnung in einem erfindungsgemäß ausgestalteten Fahrzeug zeichnet sich dadurch aus, dass die Türfensterscheibe auf einer im Fahrzeugquerschnitt gesehen bogenförmigen Bahn geführt wird, die zumindest oberhalb der Türbrüstung im unbelasteten Zustand der Türfensterscheibe stärker zur Fahrzeuglängsmittelebene gekrümmt ist als der bogenförmige Verlauf der zugeordneten Türfensterscheiben-Strak-Raumform oder in ihrer Raumlage von der Strak-Raumlage abweicht, um im belasteten Zustand eine die Dichtungswirkung bestimmende Vorspannung der Türfensterscheibe zu bewirken. Dadurch wandert der obere Rand der Türfensterscheibe mit zunehmendem Herausfahren der Türfensterscheibe aus dem Türkörper weiter zur vertikalen Fahrzeuglängsmittelebene hin, als dies bei der Strak-Raumform an der entsprechenden Position der Fall ist.

Ein Verfahren zum Konstruieren der Raumform und der Bewegungsbahn einer Fensterhebereinheit eines erfindungsgemäßen Fahrzeugs zeichnet sich dadurch aus, dass zunächst die zur Erzielung einer vorgegebenen Dichtwirkung erforderlichen Dichtkräfte ermittelt werden, die lokal auf die geschlossene Türfensterscheibe einwirken müssen, dass dann eine von der konstruktiven Strak-Raumform und/oder der konstruktiven Strak-Raumlage der Türfensterscheibe relativ zum Türkörper abweichende lastfreie Raumform und/oder lastfreie Raumlage der Türfensterscheibe relativ zum Türkörper ermittelt wird, aus der die Türfensterscheibe von den lokalen Dichtkräften annähernd zurück in die Strak-Raumform und/oder die Strak-Raumlage gedrängt wird, und dass die Krümmung der jeweiligen Führungsschiene parallel zur lastfreien Krümmung der Türfensterscheibe in deren von der Führungsschiene geführtem Bereich und um dieselbe Achse wie die Türfensterscheibe gekrümmt ausgeführt wird, so dass sich die Türfensterscheibe beim Einfahren in den Türkörper und beim Ausfahren aus dem Türkörper entlang ihrer eigenen gekrümmten Fläche bewegt. Die jeweilige lokale Krümmung der Türfensterscheibe nähert sich im belasteten Zustand somit der jeweils zugeordneten lokalen Krümmung der Strak-Raumform an.

Diese Vorgehensweise bei der Konstruktion eines Fensterhebersystems für eine seitliche Türfensterscheibe eines Fahrzeugs gemäß dem erfindungsgemäßen Verfahren, führt dazu, dass die Lage der Türfensterscheibe entlang des Verlaufs des Durchtrittsschlitzes während des Öffnungs- und Schließvorgangs, bei dem die Türfensterscheibe an den Dichtungen anliegt, stets dem Verlauf der Türfensterscheiben-Strak-Raumform entlang des Verlaufs des Durchtrittsschlitzes entspricht. Um das zu erreichen, wird der obere Scheibenrand der Türfensterscheibe, der sich im unbelasteten Zustand mit zunehmender Schließbewegung von der Türfensterscheiben-Strak-Raumform zur Fahrzeuglängsmittelebene hin entfernt, im belasteten Zustand, insbesondere beim Anfahren der dachseitigen Dichtung, von den seitlich nach außen gerichteten Federkräften der Dichtungen, insbesondere der dachseitigen Dichtung, unter Verformung der Türfensterscheibe zur Türfensterscheiben-Strak-Raumform hin verlagert. Die dadurch erzielte Vorspannung der Türfensterscheibe beim Anliegen an den Dichtungen, insbesondere an der dachseitigen Dichtung, bewirkt besonders im oberen Bereich der Türfensterscheibe eine der Dichtungskraft entgegenwirkende hohe Druckkraft der Türfensterscheibe, wodurch im Ergebnis die Türfensterscheibe in eine Raumform gezwungen, also verspannt, wird, deren Krümmungsradius größer ist als im unbelasteten Zustand der Türfensterscheibe, woraus wiederum ein flacherer Krümmungsverlauf der Türfensterscheibe resultiert, sodass sich die Lage der Türfensterscheibe im geschlossenen, belasteten Zustand der Lage der zugeordneten Strak-Raumform annähert. Im Bereich des Durchtrittsschlitzes hingegen bleibt die Türfensterscheibe in ihrer Position, die hier der Position der zugeordneten Strak-Raumform entspricht. In diesem Idealfall nimmt die Türfensterscheibe dann im geschlossenen Zustand die Raumform ihrer Strak-Raumform an.

Die Kernidee dieser Erfindung besteht also darin, ein Fensterhebersystem mit einer Türfensterscheibe zu konstruieren, das bei Herausfahren der Türfensterscheibe aus dem Türkörper bereits zu einer Abweichung gegenüber der Strak-Raumform und/oder der Strak-Raumlage führt und eine vorgegebene Vorspannung der Türfensterscheibe durch die Dichtungskräfte bewirkt. Diese Vorspannung ist an verschiedenen Punkten der Türfensterscheibe unterschiedlich groß. Auf der Basis dieser neuen vorgespannten Scheibenfläche werden die Führungsschienen konstruiert. Diese Schienen passen perfekt zur neuen Scheibenfläche und beinhalten keinen Knick im oberen Bereich, also keine Unstetigkeitsstelle, und sind stetig gekrümmt. Somit kann die Scheibe, ohne in sich verdrillt bzw. verspannt zu werden, in die oberste Position fahren und besitzt die gewünschte Vorspannung gegenüber dem Dichtsystem.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

Es zeigt:
- Fig. 1: eine Seitenansicht eines erfindungsgemäßen Fahrzeugs,
- Fig. 2: eine teilweise geschnitten dargestellte linke Seitentür des Fahrzeugs aus Fig. 1 mit einer Fensterhebereinheit und
- Fig. 3: einen Vertikalschnitt durch die Fensterhebereinheit in einer ersten Ausführungsform der Erfindung entlang der Linie III - III in Fig. 2.

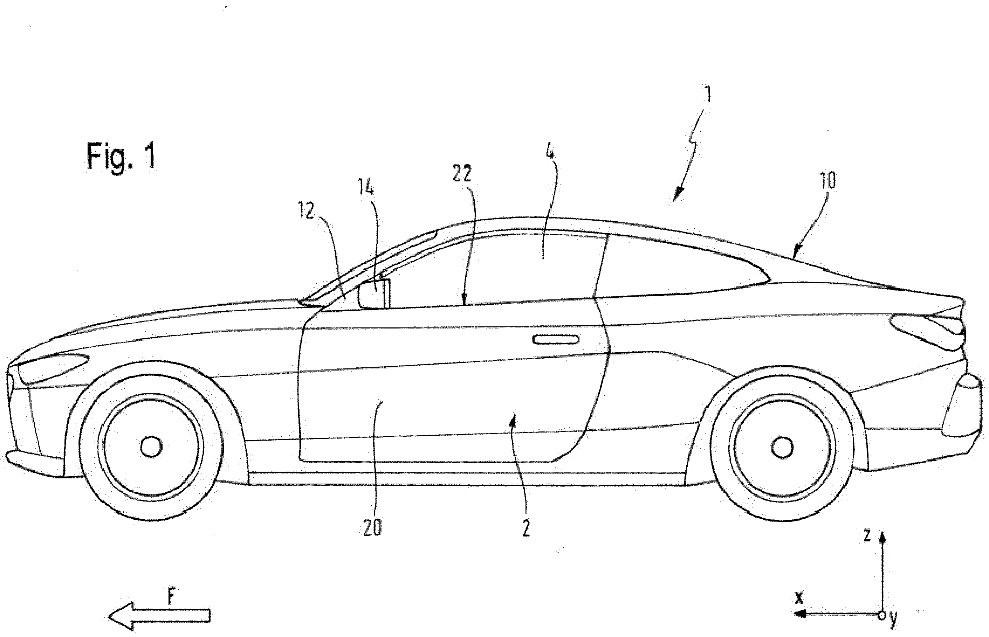

Fig. 1 zeigt eine Seitenansicht eines zweitürigen Coupé-Fahrzeugs 1 mit einer Fahrzeugkarosserie 10, die im gezeigten Beispiel eine seitliche Fahrzeugtür 2 auf jeder Fahrzeugseite aufweist, die jeweils eine Türöffnung 11 der Fahrzeugkarosserie 10 verschließt. Die Erfindung ist jedoch nicht auf zweitürige Fahrzeuge beschränkt, sondern kann auch in viertürigen oder anderen mehrtürigen Fahrzeugen realisiert sein. Auch ist die Erfindung nicht auf seitliche Fahrzeugtüren beschränkt, sondern kann ebenso in Hecktüren realisiert sein.

Die Fahrzeugtür 2 weist eine verfahrbare Türfensterscheibe 4, die eine Türfensteröffnung 11 verschließt, und einen unteren Türkörper 20 auf, der üblicherweise aus Metall oder Kunststoff gebildet ist und in dem übliche mechanische Vorrichtungen wie beispielsweise Türscharniere, Türgriff, Schloss und auch ein Fensterhebersystem 3, umfassend eine Fensterhebereinheit 30 und Führungsschienen 32, 34 für die Türfensterscheibe 4, vorgesehen sind. Der obere Rand des Türkörpers 20 bildet eine Türbrüstung 22 aus, die an der Oberseite einen sich in Fahrzeuglängsrichtung X erstreckenden Durchtrittsschlitz 24 für die Türfensterscheibe 4 aufweist.

Die Türfensterscheibe 4 ist mittels der Fensterhebereinheit 30 nach oben aus dem Türkörper 20 heraus und in diesen wieder hinein verfahrbar, wozu eine mechanische oder elektrische Antriebseinheit 31 vorgesehen ist, die die Fensterhebereinheit 30 antreibt und die dem Fachmann allgemein bekannt ist und daher hier nicht näher beschrieben wird. Auch die Fensterhebereinheit 30 ist dem Fachmann allgemein bekannt und wird daher nicht im Einzelnen beschrieben.

Der untere Türkörper 20 ist oberhalb der Türbrüstung 22 rahmenlos ausgestaltet, so dass sich die nach oben aus dem Türkörper 20 heraus gefahrene Türfensterscheibe 4 oberhalb der Türbrüstung frei erstreckt; allenfalls ist im in Fahrtrichtung F vorderen Bereich der Fahrzeugtür 2 ein so genanntes Spiegeldreieck 12 zur Montage eines Außenspiegels 14 vorgesehen, welches an seiner Rückseite (zur Fensteröffnung 11 hin gewandt) eine kurze Schienenführung 13 für die Türfensterscheibe 4 aufweist.

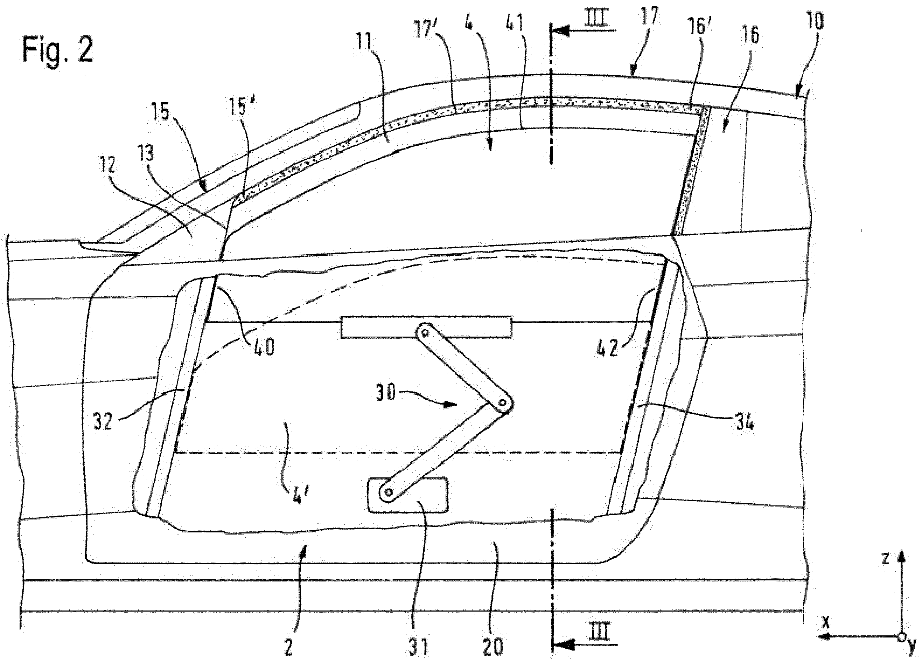

Fig. 2 zeigt die Fahrzeugtür 2 aus Fig. 1 in vergrößerter und im Bereich des unteren Türkörpers 20 teilweise aufgeschnittener Darstellung. In dieser Darstellung ist die Türfensterscheibe 4 nicht vollständig nach oben herausgefahren, so dass die Türfensteröffnung 11 der Fahrzeugkarosserie 10 teilweise geöffnet ist. Dadurch wird der Blick auf die an der Fahzeugkarosserie vorgesehenen Dichtungen frei, an denen die Türfensterscheibe 4 in ihrem geschlossenen Zustand anliegt und den Karosserieinnenraum gegenüber der äußeren Umgebung des Fahrzeugs 1 abdichten. Eine in Fahrtrichtung F vordere Dichtung 15' ist im Bereich der A-Säule 15 des Fahrzeugs 1 vorgesehen, eine entgegen der Fahrtrichtung F hintere Dichtung 16' ist im Bereich der B-Säule 16 der Fahrzeugkarosserie 10 vorgesehen und eine obere Dichtung 17' ist im Bereich des Fahrzeugdachs 17 der Fahrzeugkarosserie 10 vorgesehen. Diese Fensterdichtungen 15', 16', 17' können als ein einziges Dichtungsbauteil gebildet sein und Abschnitte in diesem Dichtungsbauteil bestimmen. Es ist aber auch möglich, beispielsweise bei einem Cabriolet, dass die Fensterdichtungen 15', 16' und 17' jeweils einzelne Bauteile sind.

In Fig. 2 ist mit gestrichelten Linien die Türfensterscheibe 4 in ihrer eingefahrenen Position zu sehen, in der sie vollständig im Inneren des unteren Türkörpers 20 aufgenommen ist. Bewegt und geführt ist die Türfensterscheibe 4 in einer ersten Führungsschiene 32 und einer zweiten Führungsschiene 34. mittels nicht dargestellter Gleiter, die an der Türfensterscheibe 4 befestigt sind und die in die jeweilige Führungsschiene eingreifen. Auch wenn in Fig. 2 der Einfachheit halber Führungsschienen dargestellt sind, die jeweils den vorderen Scheibenrand 40 beziehungsweise den hinteren Scheibenrand 42 der Türfensterscheibe 4 führen, so kann die Anordnung der Führungsschienen 32, 34 auch jede andere dem Fachmann bekannte Lage im Inneren des Türkörpers 20 einnehmen.

Die Fensterhebereinheit 30, die in Fig. 2 nur schematisch als Hebelgetriebe angedeutet ist, bildet zusammen mit den Führungsschienen 32, 34 und der Antriebseinheit 31 der Fensterhebereinheit 30 das Fensterhebersystem 3; auch die Türfensterscheibe 4 kann funktional als zum Fensterhebersystem 3 zugehörig angesehen werden.

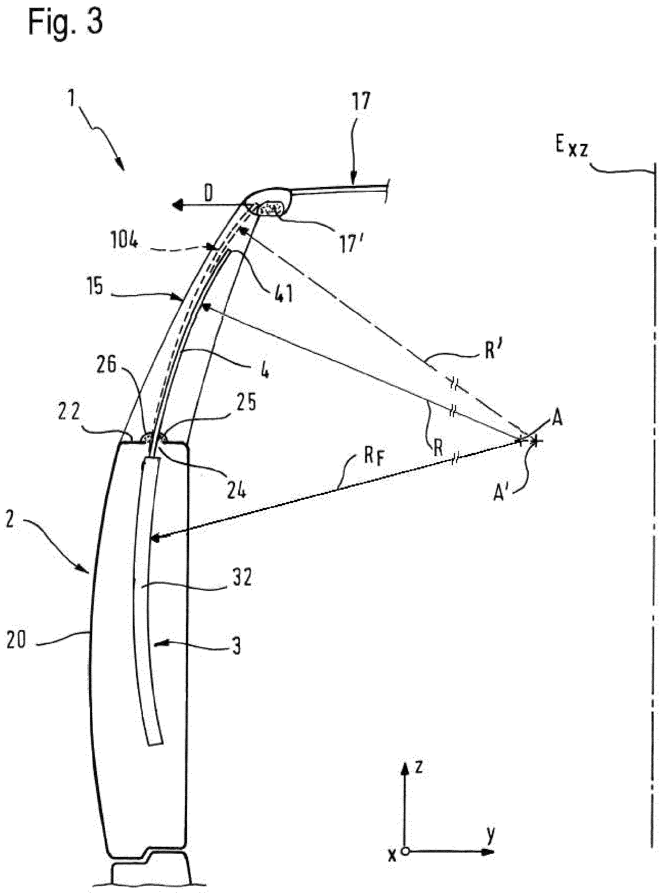

Fig. 3 zeigt einen Vertikalschnitt durch die Fahrzeugtür 2 in einer vertikalen Fahrzeugquerebene E_{YZ} in vereinfachter Darstellung. In dieser Darstellung ist der Durchtrittsschlitz 24 in der oberen Türbrüstung 22 des Türkörpers 20 zu sehen und es ist auch zu erkennen, dass der Durchtrittsschlitz 24 an seinen Längsrändern mit einer inneren Dichtung 25 und einer äußeren Dichtung 26 ausgestattet ist, die an der aus dem unteren Türkörper 20 heraustretenden Türfensterscheibe 4 innen und außen anliegen. Die Türfensterscheibe 4 ist in Fig. 3 - wie in Fig. 2 - nicht vollständig aus dem unteren Türkörper herausgefahren.

Bei diesem ersten Ausführungsbeispiel der Erfindung ist die Türfensterscheibe 4 um eine zur Fahrzeuglängsmittelebene Exz hin gelegene und in der Seitenansicht (mit Blick auf die Ebene E_{ZX}) zum Durchtrittsschlitz im Wesentlichen parallel verlaufende Krümmungsachse A mit einem Krümmungsradius R gekrümmt. Diese Krümmung mit dem Radius R setzt sich auf Basis der Krümmungsachse A als Radius R_{F} der Führungsschiene im Inneren des unteren Türkörpers 20 in den dort gelegenen Führungsschienen 32, 34 fort, von denen in Fig. 3 nur die in Fahrtrichtung vordere, erste Führungsschiene 32 zu sehen ist. Die Krümmung mit dem Radius R um die Krümmungsachse A ist stetig und gleichmäßig, so dass die gekrümmt ausgebildete Türfensterscheibe 4 im Wesentlichen verspannungsfrei in den Führungsschienen geführt wird.

In Fig. 3 ist in gestrichelter Darstellung eine Strak-Raumform 104 gezeigt, die der von der Konstruktion vorgegebenen Fensterfläche der Türfensterscheibe 4 in deren geschlossenem Zustand entspricht. Diese Strak-Raumform 104 sollte die Türfensterscheibe 4 einnehmen, wenn die Türfensteröffnung 11 vollständig geschlossen ist und wenn die Türfensterscheibe 4 mit ihrem oberen Scheibenrand 41 gegen die dachseitige Dichtung 17' anliegt und von der Dichtungskraft D der dachseitigen Dichtung 17' nach außen gedrückt wird, wie dies in Fig. 3 durch einen Kraftpfeil D symbolisiert ist. In Fig. 3 ist deutlich zu erkennen, dass die Krümmung der Strak-Raumform 104 geringer ist, der Krümmungsradius R' der Strak-Raumform 104 also größer ist als der Krümmungsradius R der unbelasteten, nicht von der Dichtungskraft D nach außen gedrückten Türfensterscheibe 4. Lediglich im Bereich des Durchtrittsschlitzes 24 sind die Endpunkte der Radien R und R' gleich, so dass an dieser Stelle sowohl die tatsächliche Lage der Türfensterscheibe 4 als auch die Lage ihrer idealen Strak-Raumform 104 identisch sind.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Seitenansicht eines zweitürigen Coupé-Fahzeugs
- 2: seitliche Fahrzeugtür
- 3: Fensterhebersystem
- 3": Fensterhebersystem
- 4: Türfensterscheibe (vorgespannt)
- 4': Türfensterscheibe
- 10: Fahrzeugkarosserie
- 11: Türfensteröffnung
- 12: Spiegeldreieck
- 13: Schienenführung am Spiegeldreieck
- 14: Außenspiegel
- 15: A-Säule
- 15': vordere Dichtung
- 16: B-Säule
- 16': hintere Dichtung
- 17: Fahrzeugdach
- 17': obere, dachseitige Dichtung
- 20: unterer Türkörper
- 22: Türbrüstung
- 24: Durchtrittsschlitz
- 25: innere Dichtung
- 26: äußere Dichtung
- 30: Fensterhebereinheit
- 31: Antriebseinheit
- 32: erste, vordere Führungsschiene
- 32': erste, vordere Führungsschiene
- 34: zweite, hintere Führungsschiene
- 40: vorderer Scheibenrand
- 41: oberer Scheibenrand
- 42: hinterer Scheibenrand
- 104: Strak-Raumform der Türfensterscheibe

- A: Krümmungsachse
- D: Dichtungskraft
- E_{XZ}: Fahrzeuglängsmittelebene
- E_{YZ}: Fahrzeugquerebene
- F: Fahrtrichtung
- R: Krümmungsradius
- R_{F}: Krümmungsradius Führungsschiene
- R': Krümmungsradius
- X: Fahrzeuglängsrichtung

## Patentansprüche

1. Fahrzeug, insbesondere Kraftfahrzeug, mit einer Fahrzeugkarosserie (10), die zumindest eine rahmenlose Fahrzeugtür (2) aufweist, die einen unteren Türkörper (20) und eine mittels einer Fensterhebereinheit (30) nach oben aus dem Türkörper (20) heraus und in diesen wieder hinein verfahrbare Türfensterscheibe (4, 4') aufweist,
- wobei der Türkörper (20) oberhalb einer den Türkörper (20) nach oben begrenzenden Türbrüstung (22) rahmenlos ausgestaltet ist,
- wobei die Türbrüstung (22) einen Durchtrittsschlitz (24) für die Türfensterscheibe (4, 4') aufweist,
- wobei die Türfensterscheibe (4, 4') innerhalb des Türkörpers (20) von einer ersten Führungsschiene (32) und einer von dieser beabstandeten zweiten Führungsschiene (34) geführt ist und
- wobei die Türfensterscheibe (4, 4') im aus dem Türkörper (20) ausgefahrenen Zustand und bei geschlossener Fahrzeugtür (2) zumindest mit ihrem ersten seitlichen Scheibenrand (40) an einer ersten karosserieseitigen Dichtung (15') und mit ihrem zweiten seitlichen Scheibenrand (42) an einer zweiten karosserieseitigen Dichtung (16') anliegt,
- wobei die Türfensterscheibe (4, 4') zur vertikalen Fahrzeuglängsmittelebene (E_{XZ}) hin gekrümmt ist, und
- wobei die jeweilige Führungsschiene (32; 34) parallel zur unbelasteten Türfensterscheibe (4, 4') in deren von der Führungsschiene (32; 34) geführtem Bereich verläuft und um dieselbe Krümmungsachse (A) wie die Türfensterscheibe (4, 4') gekrümmt ist,
**dadurch gekennzeichnet,**
- **dass** die Krümmung und/oder die Lage der Führungsschienen (32; 34) relativ zum Türkörper (20) von einer konstruktiv festgelegten Strak-Krümmung und/oder Strak-Raumlage der Führungsschienen (32; 34) relativ zum Türkörper (20) abweicht und dergestalt ausgebildet beziehungsweise angeordnet ist,
∘ dass die Türfensterscheibe (4, 4') in einem aus dem Türkörper (20) ausgefahrenen unbelasteten Zustand eine erste Raumform ausbildet und/oder eine erste Raumlage relativ zum Türkörper (20) einnimmt, die von einer konstruktiv festgelegten Türfensterscheiben-Strak-Raumform (104) und/oder Türfensterscheiben-Strak-Raumlage relativ zum Türkörper (20) abweicht, und
∘ dass die Türfensterscheibe (4, 4') in einem belasteten Zustand, in dem die Scheibenränder (40, 41, 42) an der jeweils zugeordneten Dichtung (15', 16', 17') anliegen, eine zweite Raumform ausbildet und/oder eine zweite Raumlage relativ zum Türkörper (20) einnimmt, die im Wesentlichen der Türfensterscheiben-Strak-Raumform (104) und/oder Türfensterscheiben-Strak-Raumlage relativ zum Türkörper (20) entspricht;
sowie
- **dass** die Türfensterscheibe (4') im unbelasteten Zustand im Wesentlichen lokal die gleiche Krümmung wie die Strak-Raumform (104) aufweist, jedoch in ihrer Raumlage von der Strak-Raumlage abweicht und/oder
- **dass** der Krümmungsradius (R) der Türfensterscheibe um die in der Seitenansicht zum Durchtrittsschlitz (24) im Wesentlichen parallel verlaufende Krümmungsachse (A) im unbelasteten Zustand der Türfensterscheibe (4) kleiner ist als deren Krümmungsradius (R') im belasteten Zustand.

2. Fahrzeug nach Anspruch 1,
**dadurch gekennzeichnet,**
**dass** die Krümmung des von der jeweiligen Führungsschiene (32; 34) geführten Bereichs der Türfensterscheibe (4, 4') in deren unbelastetem Zustand jeweils um eine Krümmungsachse (A) gekrümmt ist, die zumindest eine zum Durchtrittsschlitz (24) im Wesentlichen parallel verlaufende Richtungskomponente aufweist.

3. Fahrzeug nach einem der vorhergehenden Ansprüche,
**dadurch gekennzeichnet,**
**dass** die karosserieseitigen Dichtungen (15', 16', 17') jeweils einen gekrümmten Verlauf aufweisen, der der Krümmung des zugeordneten Scheibenrandes der Türfensterscheiben-Strak-Raumform (104) entspricht.

4. Fahrzeug nach einem der vorhergehenden Ansprüche,
**dadurch gekennzeichnet,**
**dass** der Verlauf der Krümmung der jeweiligen Führungsschiene (32, 32'; 34) stetig ist.

5. Verfahren zum aerodynamisch optimierten dichten, insbesondere wasserdichten, Verschließen einer Türfensteröffnung (11) in einem Fahrzeug (1) nach einem der vorhergehenden Ansprüche,
**dadurch gekennzeichnet,**
**dass** die Türfensterscheibe (4, 4') auf einer im Fahrzeugquerschnitt gesehen bogenförmigen Bahn geführt wird, die zumindest oberhalb der Türbrüstung (22) im unbelasteten Zustand der Türfensterscheibe (4, 4') stärker zur Fahrzeuglängsmittelebene (E_{XZ}) gekrümmt ist als der bogenförmige Verlauf der zugeordneten Türfensterscheiben-Strak-Raumform (104) oder in ihrer Raumlage von der Strak-Raumlage abweicht, um im belasteten Zustand eine die Dichtungswirkung bestimmende Vorspannung der Türfensterscheibe zu bewirken.

6. Verfahren zum Konstruieren der Raumform und der Bewegungsbahn einer Fensterhebereinheit (30) eines Fahrzeugs nach einem der Ansprüche 1 bis 4,
**dadurch gekennzeichnet,**
- **dass** zunächst die zur Erzielung einer vorgegebenen Dichtwirkung erforderlichen Dichtkräfte ermittelt werden, die lokal auf die geschlossene Türfensterscheibe (4, 4') einwirken müssen,
- **dass** dann eine von der konstruktiven Strak-Raumform und/oder der konstruktiven Strak-Raumlage der Türfensterscheibe (4, 4') relativ zum Türkörper (20) abweichende lastfreie Raumform und/oder lastfreie Raumlage der Türfensterscheibe (4, 4') relativ zum Türkörper (20) ermittelt wird, aus der die Türfensterscheibe (4, 4') von den lokalen Dichtkräften zurück in die Strak-Raumform und/oder Strak-Raumlage gedrängt wird, und
- **dass** die Krümmung der jeweiligen Führungsschiene (32; 34) parallel zur lastfreien Krümmung der Türfensterscheibe (4, 4') in deren von der Führungsschiene (32; 34) geführtem Bereich und um dieselbe Achse wie die Türfensterscheibe (4, 4') gekrümmt ausgeführt wird, so dass sich die Türfensterscheibe (4, 4') beim Einfahren in den Türkörper (20) und beim Ausfahren aus dem Türkörper (20) entlang ihrer eigenen gekrümmten Fläche bewegt.

## Claims

1. Vehicle, in particular motor vehicle, having a vehicle body (10) which has at least one frameless vehicle door (2) which has a lower door body (20) and a door window pane (4, 4') that is able to be moved upward out of the door body (20) and back into the latter by means of a window lifter unit (30),
- wherein the door body (20) is designed to be frameless above a door shoulder (22) that upwardly delimits the door body (20),
- wherein the door shoulder (22) has a passage slot (24) for the door window pane (4, 4'),
- wherein the door window pane (4, 4') is guided, within the door body (20), by a first guide rail (32) and a second guide rail (34) at a distance from the latter, and
- wherein, when it is in the state extended out of the door body (20) and with the vehicle door (2) closed, the door window pane (4, 4') bears, at least with its first lateral pane edge (40), against a first seal (15') on the vehicle body and, with its second lateral pane edge (42), against a second seal (16') on the vehicle body,
- wherein the door window pane (4, 4') is curved toward the vertical vehicle longitudinal centre plane (Exz), and
- wherein each guide rail (32; 34) extends parallel to the unloaded door window pane (4, 4') in the region of the latter guided by the guide rail (32; 34) and is curved about the same axis of curvature (A) as the door window pane (4, 4'),
**characterized in that**
- the curvature and/or the position of the guide rails (32; 34) relative to the door body (20) deviate from a constructionally fixed class-A-surface curvature and/or class-A-surface spatial position of the guide rails (32; 34) relative to the door body (20) and are designed or arranged in such a way
∘ that, when it is in an unloaded state extended out of the door body (20), the door window pane (4, 4') forms a first spatial form and/or takes up a first spatial position relative to the door body (20), which deviates from a constructionally fixed door-window-pane class-A-surface spatial form (104) and/or door-window-pane class-A-surface spatial position relative to the door body (20), and
∘ that, when it is in a loaded state, in which the pane edges (40, 41, 42) bear against the respectively associated seal (15', 16', 17'), the door window pane (4, 4') forms a second spatial form and/or takes up a second spatial position relative to the door body (20), which corresponds substantially to the door-window-pane class-A-surface spatial form (104) and/or door-window-pane class-A-surface spatial position relative to the door body (20);
and
- **in that**, in the unloaded state, the door window pane (4') has substantially locally the same curvature as the class-A-surface spatial form (104), but deviates from the class-A-surface spatial form in terms of its spatial position and/or
- **in that** the radius of curvature (R) of the door window pane about the axis of curvature (A) extending substantially parallel to the passage slot (24) in the side view is smaller in the unloaded state of the door window pane (4) than the radius of curvature (R') thereof in the loaded state.

2. Vehicle according to Claim 1,
**characterized in that**
the curvature of the region, guided by each guide rail (32; 34), of the door window pane (4, 4') is curved, in the unloaded state of the latter, in each case about an axis of curvature (A) which has at least one direction component extending substantially parallel to the passage slot (24).

3. Vehicle according to one of the preceding claims,
**characterized in that**
the seals (15', 16', 17') on the vehicle body each have a curved course which corresponds to the curvature of the associated pane edge of the door-window-pane class-A-surface spatial form (104).

4. Vehicle according to one of the preceding claims,
**characterized in that**
the course of the curvature of each guide rail (32, 32'; 34) is constant.

5. Method for closing a door window opening (11) in a vehicle (1) according to any of the preceding claims in an aerodynamically optimized tight, in particular watertight, manner,
**characterized in that**
the door window pane (4, 4') is guided on a path which is arcuate as seen in cross section through the vehicle and which is curved more strongly with respect to the vehicle longitudinal centre plane (Exz) at least above the door shoulder (22) in the unloaded state of the door window pane (4, 4') than the arcuate course of the associated door-window-pane class-A-surface spatial form (104), or its spatial position deviates from the class-A-surface spatial position, in order to bring about preloading of the door window pane, determining the sealing action, in the loaded state.

6. Method for constructing the spatial form and movement path of a window lifter unit (30) of a vehicle according to one of Claims 1 to 4,
**characterized in that**
- first of all, the sealing forces that are necessary for achieving a predefined sealing action and need to act locally on the closed door window pane (4, 4') are determined,
- then, a load-free spatial form and/or load-free spatial position of the door window pane (4, 4') relative to the door body (20), deviating from the constructional class-A-surface spatial form and/or from the constructional class-A-surface spatial position of the door window pane (4, 4') relative to the door body (20), is determined, from which the door window pane (4, 4') is urged back into the class-A-surface spatial form and/or class-A-surface spatial position by the local sealing forces, and
- the curvature of each guide rail (32; 34) is designed to be curved parallel to the load-free curvature of the door window pane (4, 4') in the region thereof guided by the guide rail (32; 34), and about the same axis as the door window pane (4, 4'), such that, when it is retracted into the door body (20) and when it is extended out of the door body (20), the door window pane (4, 4') moves along its own curved area.

## Revendications

1. Véhicule, en particulier véhicule à moteur, avec une carrosserie (10), qui comporte au moins une porte sans cadre (2), qui comporte un corps de porte inférieur (20) et une vitre de porte (4, 4') pouvant être déplacée vers le haut hors du corps de porte (20) au moyen d'un lève-vitre (30) et pouvant être déplacée à nouveau dans celui-ci,
- le corps de porte (20) étant configuré sans cadre au-dessus d'un appui de porte (22) délimitant vers le haut le corps de porte (20),
- l'appui de porte (22) comportant une fente de passage (24) pour la vitre de porte (4, 4'),
- la vitre de porte (4, 4') étant guidée à l'intérieur du corps de porte (20) par un premier rail de guidage (32) et un deuxième rail de guidage (34) espacé de celui-ci et
- la vitre de porte (4, 4') reposant, dans l'état sorti du corps de porte (20) et en cas de fermeture de la porte de véhicule (2), au moins par son premier bord de vitre (40) latéral, sur un premier joint d'étanchéité (15') côté carrosserie et par son deuxième bord de vitre (42) latéral sur un deuxième joint d'étanchéité (16') côté carrosserie,
- la vitre de porte (4, 4') étant courbée en direction du plan longitudinal médian vertical(E_{XZ}) de véhicule, et
- le rail de guidage (32 ; 34) respectif s'étendant parallèlement à la vitre de porte (4, 4') non chargée dans sa zone guidée par le rail de guidage (32 ; 34) et étant courbé autour du même axe de courbure (A) que la vitre de porte (4, 4'),
**caractérisé en ce**
- **que** la courbure et/ou la position des rails de guidage (32 ; 34) par rapport au corps de porte (20) s'écartent d'une courbure de de surface de classe A et/ou d'une position spatiale de surface de classe A définies sur le plan structurel des rails de guidage (32 ; 34) par rapport au corps de porte (20) et sont formées ou disposées de telle manière,
∘ que la vitre de porte (4, 4') forme une première forme spatiale dans un état non chargé sorti du corps de porte (20) et/ou occupe une première position spatiale par rapport au corps de porte (20), qui s'écarte d'une forme spatiale de surface de classe A de vitres de porte (104) définie sur le plan structurel et/ou d'une position spatiale de surface de classe A de vitres de porte par rapport au corps de porte (20), et
∘ que la vitre de porte (4, 4') forme, dans un état chargé, dans lequel les bords de vitre (40, 41, 42) reposent sur le joint d'étanchéité (15', 16', 17') respectivement associé, une deuxième forme spatiale et/ou occupe une deuxième position spatiale par rapport au corps de porte (20), qui correspond sensiblement à la forme spatiale de surface de classe A de vitre de porte (104) et/ou à la position spatiale de surface de classe A de vitre de porte par rapport au corps de porte (20) ; et
- **que** la vitre de porte (4') présente sensiblement la même courbure localement que la forme spatiale de surface de classe A (104) dans l'état non chargé, toutefois s'écarte dans sa position spatiale de la position spatiale de surface de classe A et/ou
- **que** le rayon de courbure (R) de la vitre de porte autour de l'axe de courbure (A) s'étendant sensiblement parallèlement à la fente de passage (24) dans la vue latérale est inférieur dans l'état non chargé de la vitre de porte (4) au rayon de courbure (R') de celle-ci dans l'état chargé.

2. Véhicule selon la revendication 1,
**caractérisé en ce**
**que** la courbure de la zone de la vitre de porte (4, 4') guidée par le rail de guidage (32 ; 34) respectif est courbée, dans l'état non chargé de la vitre de porte, autour d'un axe de courbure (A), qui présente au moins une composante de direction s'étendant sensiblement parallèlement à la fente de passage (24).

3. Véhicule selon l'une des revendications précédentes,
**caractérisé en ce**
**que** les joints d'étanchéité (15', 16', 17') côté carrosserie comportent chacun un profil courbe, qui correspond à la courbure du bord de vitre associé de la forme spatiale de surface de classe A de vitre de porte (104).

4. Véhicule selon l'une des revendications précédentes,
**caractérisé en ce**
**que** le profil de la courbure du rail de guidage (32, 32' ; 34) respectif est continu.

5. Procédé de fermeture étanche optimisée sur le plan aérodynamique, en particulier imperméable, d'une ouverture de fenêtre de porte (11) dans un véhicule (1) selon l'une des revendications précédentes,
**caractérisé en ce**
**que** la vitre de porte (4, 4') est guidée sur une trajectoire en arc de cercle, vue en coupe transversale du véhicule, qui, dans l'état non chargé de la vitre de porte (4, 4'), est plus fortement courbée par rapport au plan longitudinal médian (E_{XZ}) de véhicule au-moins au-dessus de l'appui de porte (22) que le profil en forme d'arc de la forme spatiale de surface de classe A de vitre de porte (104) associée ou qui s'écarte dans sa position spatiale de la position spatiale de surface de classe A pour entraîner dans l'état chargé une précontrainte définissant l'action d'étanchéité.

6. Procédé de construction de la forme spatiale et de la trajectoire de déplacement d'un lève-vitre (30) d'un véhicule selon l'une des revendications 1 à 4,
**caractérisé en ce**
- **que** d'abord les forces d'étanchéité nécessaires pour obtenir un effet d'étanchéité spécifié, lesquelles doivent agir localement sur la vitre de porte (4, 4') fermée, sont déterminées,
- **qu'**alors une forme spatiale sans charge s'écartant de la forme spatiale de surface de classe A sur le plan structurel et/ou de la position spatiale de surface de classe A sur le plan structurel de la vitre de porte (4, 4') par rapport au corps de porte (20) et/ou une forme spatiale sans charge de la vitre de porte (4, 4') sont déterminées par rapport au corps de porte (20), à partir desquelles la vitre de porte (4, 4') est forcée de revenir dans la forme spatiale de surface de classe A et/ou dans la position spatiale de surface de classe A par les forces d'étanchéité locales, et
- **que** la courbure du rail de guidage (32 ; 34) respectif est réalisée parallèlement à la courbure sans charge de la vitre de porte (4, 4') dans sa zone guidée par le rail de guidage (32 ; 34) et de manière courbée autour du même axe que la vitre de porte (4, 4'), de telle sorte que la vitre de porte (4, 4') se déplace le long de sa propre surface courbée lorsqu'elle rentre dans le corps de porte (20) et lorsqu'elle sort du corps de porte (20).
